# EUROPÄISCHE PATENTSCHRIFT

(11) **EP 2 840 030 B1**
(45) Veröffentlichungstag und Bekanntmachung des Hinweises auf die Patenterteilung: **24.02.2016**
(21) Anmeldenummer: 14175387.1
(22) Anmeldetag: 02.07.2014
(51) Int. Cl.: B65B 35/38, B65B 35/50, B65G 47/91, B65G 47/04

(54) **Vorrichtung zum Transferieren von Blisterpackungen**
Device for transferring blister packs
Dispositif de transfert d'emballages de type blister

(30) Priorität: 23.08.2013 EP 13181518
(43) Veröffentlichungstag der Anmeldung: 25.02.2015
(73) Patentinhaber: UHLMANN PAC-SYSTEME GmbH & Co. KG, 88471 Laupheim (DE)
(72) Erfinder: Hähnel, Bernd, 76297 Stutensee (DE); Linke, Roberto, 89231 Neu-Ulm (DE)
(74) Vertreter: Wächter, Jochen

(56) Entgegenhaltungen:
- EP-A2- 1 595 828
- WO-A1-00/68086
- WO-A1-2005/097601
- DE-A1-102004 043 332

## Beschreibung

Die vorliegende Erfindung betrifft eine Vorrichtung zum Transferieren von Blisterpackungen von einer Stanzstation an ein Fördermittel.

Blisterpackungen werden häufig in der pharmazeutischen Industrie bei der Verpackung von Medikamenten verwendet. Hierbei wird zunächst in einer Folienmaterialbahn eine Vielzahl von Näpfen gebildet, in welche Produkte, wie etwa Dragees oder Tabletten, eingebracht werden. Anschließend wird die Folienmaterialbahn mit den befüllten Näpfen mit einer Deckfolie versiegelt und einer Stanzstation zugeführt, in der die jeweiligen Blisterpackungen aus der Folienmaterialbahn ausgestanzt werden.

In einer weiteren Phase des Verpackungsprozesses werden die ausgestanzten Blisterpackungen mit Hilfe einer Transferiervorrichtung an ein Fördermittel übertragen. Die Blisterpackungen werden dabei in Stapeln in jeweiligen Aufnahmen des Fördermittels abgelegt. Abschließend werden die auf dem Fördermittel angeordneten Stapel von Blisterpackungen einer Verpackungsstation zugeführt, in der die Stapel von Blisterpackungen in entsprechende Verpackungen, wie etwa Faltschachteln, eingebracht werden. Die Zeit, welche die Transferiervorrichtung für die Übergabe von Blisterpackungen von der Stanzstation an das Fördermittel benötigt, hat logischerweise einen Einfluss auf den Durchsatz der gesamten Verpackungsmaschine.

Bei einer bekannten Transferiervorrichtung gemäß DE 10 2004 043 332 A1 wird die Folienmaterialbahn mit den befüllten und versiegelten Näpfen in vertikaler Richtung einer Stanzstation zugeführt. Die entsprechend in vertikaler Ausrichtung ausgestanzten Blisterpackungen werden dann von einem Saugerarm der Transferiervorrichtung aufgegriffen, auf die gegenüberliegende Seite der Transferiervorrichtung übertragen, und auf einem weiter unten befindlichen Fördermittel, jedoch nun in horizontaler Ausrichtung, abgelegt.

Der Erfindung liegt die Aufgabe zugrunde, eine verbesserte Vorrichtung zum Transferieren von Blisterpackungen von einer Stanzstation an ein Fördermittel zu schaffen, bei welcher der Transfer von Blisterpackungen effizienter und präziser erfolgt.

Diese Aufgabe wird durch die Merkmale des Anspruchs 1 gelöst.

Erfindungsgemäß wird eine Vorrichtung zum Transferieren von Blisterpackungen von einer Stanzstation an ein Fördermittel vorgeschlagen, mit einem ersten und einem zweiten Saugerarm zum Aufnehmen der Blisterpackungen in einer Aufnahmeposition von der Stanzstation, zum Bewegen der Blisterpackungen in einer Förderrichtung und zum Ablegen der Blisterpackungen in einer Abgabeposition auf das Fördermittel. Der erste Saugerarm und der zweite Saugerarm sind zu beiden Seiten einer Mittelebene angeordnet und der erste und der zweite Saugerarm sind um eine erste Achse, die senkrecht zur Förderrichtung und senkrecht zur Mittelebene verläuft, schwenkbar. Die Schwenkbewegungen des ersten und zweiten Saugerarms sind derart steuerbar, dass die beiden Saugerarme gegenläufige hin- und hergehende Schwenkbewegungen ausführen. Jeder Saugerarm weist ein erstes Segment, ein zweites, mittleres Segment, und ein drittes Segment auf. Das erste Segment jedes Saugerarms ist an der zugehörigen ersten Achse schwenkbar befestigt und weist einen von der ersten Achse beabstandeten Abschnitt auf, an dem das zweite, mittlere Segment schwenkbar um eine zur ersten Achse im Wesentlichen senkrecht verlaufende ortsveränderliche zweite Achse befestigt ist. Das zweite Segment weist wiederum einen von der zweiten Achse beabstandeten Abschnitt auf, an dem ein drittes Segment um eine ortsveränderliche dritte Achse, die im Wesentlichen parallel und beabstandet zur zweiten Achse verläuft, drehbar befestigt ist. Das dritte Segment weist einen Abschnitt auf, an dem wenigstens ein Saugelement zum Ansaugen und Halten einer Blisterpackung angeordnet ist. Die Transferbewegung der Blisterpackungen von der Aufnahmeposition zur Abgabeposition und zurück ist eine kombinierte Bewegung, die sich aus der Schwenkbewegung um die erste Achse, der Schwenkbewegung um die zweite Achse, und der Drehbewegung um die dritte Achse zusammensetzt. Die Blisterpackungen werden dabei in der Aufnahmeposition von dem wenigstens einen Saugelement von oben aufgenommen und ebenfalls von oben in der Abgabeposition auf dem Fördermittel abgelegt. Die zweiten Segmente sind in der Aufnahmeposition und in der Abgabeposition jeweils in Richtung zur Mittelebene nach innen geschwenkt, während sie bei der gegenläufigen Schwenkbewegung der Saugerarme zwischen Aufnahmeposition und Abgabeposition voneinander wegschwenken, so dass die Saugerarme einander kollisionsfrei passieren können.

Da die Blisterpackungen von den Saugelementen der erfindungsgemäßen Transferiervorrichtung in horizontaler Ausrichtung an der Stanzstation aufgegriffen werden, ist es möglich, die Folienmaterialbahn horizontal der Stanzstation zuzuführen und das Stanzwerkzeug in vertikaler Richtung von oben nach unten zur Durchführung des Stanzvorgangs zu bewegen. Da nun sowohl die Befüllung der Näpfe, die ohnehin in horizontaler Ausrichtung der Folienmaterialbahn erfolgen muss, als auch der Stanzvorgang in horizontaler Ausrichtung erfolgt, ist ein kompakterer und damit effizienterer Verpackungsablauf realisierbar.

Vorzugsweise stehen die Segmente der Saugerarme derart in Wirkverbindung, dass die Schwenkbewegung des ersten Segments eine Schwenkbewegung des zweiten Segments bewirkt und die Schwenkbewegung des zweiten Segments eine Drehbewegung des dritten Segments bewirkt. Letztlich muss also nur die Schwenkbewegung des ersten Segments durch einen Antrieb oder eine Kurvenführung realisiert werden, während die übrigen Bewegungen des zweiten und des dritten Segments infolge der Wirkverbindungen der Segmente untereinander mit der Antriebsbewegung des ersten Segments einhergehen. Ein separater aktiver Antrieb für die zweiten und dritten Segmente ist nicht erforderlich.

In weiterer Ausgestaltung sind zum Aufnehmen einer Blisterpackung das dritte Segment des ersten Saugerarmes und das dritte Segment des zweiten Saugerarms in derselben Aufnahmeposition anordenbar. Der Vorteil besteht darin, dass sich im Bereich der Stanzstation eine Platzersparnis insofern ergibt, als dass sich jeweils die dritten Segmente eine Aufnahmeposition "teilen". Oder anders ausgedrückt, es muss raumtechnisch anstelle von zwei verschiedenen Aufnahmepositionen, in der die dritten Segmente anzuordnen wären, lediglich eine einzige Aufnahmeposition berücksichtigt werden, woraus wiederum eine einfachere und kompaktere Anordnung der Transferiervorrichtung resultiert.

Wenn die Saugerarme von der Aufnahmeposition zur Abgabeposition oder umgekehrt bewegt werden, führen die zweiten Segmente eine Schwenkbewegung um die zweite Achse von 360° aus. Damit können das Anordnen der Saugerarme in der Aufnahme- und Abgabeposition sowie die erforderliche Ausweichbewegung in einfacher Weise realisiert werden.

Bei einer weiteren speziellen Ausgestaltung ist in dem ersten Segment ein Kegelrad drehbar gelagert, das mit dem zweiten Segment drehfest verbunden ist, wobei bei einer Drehung des ersten Segments um die erste Achse das Kegelrad an einem weiteren feststehenden Kegelrad abrollt und das zweite Segment um die zweite Achse in Schwenkbewegung versetzt.

Bei einer noch spezielleren Ausgestaltung ist in dem zweiten Segment ein erstes Zahnriemenrad angeordnet und drehfest mit dem ersten Segment verbunden, und in dem zweiten Segment ist ein zweites Zahnriemenrad angeordnet und drehbar gelagert. Das erste Zahnriemenrad und das zweite Zahnriemenrad sind über einen Zahnriemen wirkverbunden, wobei eine Schwenkbewegung des zweiten Segments eine Drehbewegung des zweiten Zahnriemenrads bewirkt. Das zweite Zahnriemenrad ist drehfest mit dem dritten Segment verbunden, wobei eine Drehbewegung des zweiten Zahnriemenrads eine Drehbewegung des dritten Segments um die dritte Achse bewirkt.

Bei einer ersten Ausführungsform liegen Aufnahmeposition und Abgabeposition in unterschiedlichen horizontalen Ebenen, so dass mit der Transferbewegung sowohl eine horizontale als auch eine vertikale Übertragungsbewegung einhergeht.

Die beiden Saugerarme sind vorzugsweise an jeweiligen Schlitten drehbar gelagert, die an jeweiligen Führungseinrichtungen in vertikaler Richtung verfahrbar sind, und es ist eine Antriebseinheit zum Verfahren der Schlitten in vertikaler Richtung vorgesehen. Zwischen dem Saugerarm und der Antriebseinheit besteht eine Zwangsführung derart, dass eine Vertikalbewegung der Schlitten eine gleichzeitige Schwenkbewegung der Saugerarme in gegenläufigen Drehrichtungen um die erste Achse bewirkt, wobei die erste Achse aufgrund der Verschiebung der Schlitten ortsveränderlich ist.

Weiterhin umfasst jede Antriebseinheit einen Drehantrieb und jedem Schlitten ist ein in vertikaler Richtung verlaufender Zahnriementrieb mit je einem Zahnriemen, einem Antriebs-Riemenrad, und einem Lauf-Riemenrad zugeordnet, wobei die Schlitten mit den jeweiligen Zahnriemen verbunden sind und der Drehantrieb das jeweilige Antriebs-Riemenrad antreibt, um die Schlitten in vertikaler Richtung zu bewegen.

Schließlich ist an jedem Schlitten ein größeres Zahnrad drehbar gelagert, an dem wiederum ein Hebel befestigt ist, wobei an dem Hebel eine Kurvenrolle angeordnet ist, die in einer Kurvenbahn derart geführt ist, dass das Bewegen der Kurvenrolle entlang der Kurvenbahn eine Auslenkbewegung des Hebels und damit eine Drehbewegung des größeren Zahnrads bewirkt, und an jedem Schlitten ist ein kleineres Zahnrad, das mit dem größeren Zahnrad kämmt, drehbar gelagert und mit dem ersten Segment des jeweiligen Saugerarmes drehfest verbunden, um den Saugerarm um die erste Achse in Schwenkbewegung zu versetzen.

Alternativ können sich die Aufnahmeposition und die Abgabeposition im Wesentlichen in einer gemeinsamen horizontalen Ebene befinden.

Mit Vorteil sind dem ersten und zweiten Saugerarm dann direkt ein erster und ein zweiter Antrieb zugeordnet, um die Saugerarme in entgegengesetzte Drehrichtungen zu schwenken.

Weitere Eigenschaften und Vorteile der vorliegenden Erfindung ergeben sich aus der nachfolgenden Beschreibung unter Bezugnahme auf die Zeichnungen.
- Fig. 1 bis 6: sind perspektivische Ansichten einer erfindungsgemäßen Vorrichtung zum Transferieren von Blisterpackungen gemäß einer ersten Ausführungsform, in denen die verschiedenen Phasen der Transferierbewegung eines ersten Saugerarms und der zeitgleichen Rückführbewegung des zweiten Saugerarms gezeigt sind;
- Fig. 7: ist eine Ansicht im Schnitt des ersten Saugerarms in den Fig. 1 bis 6;
- Fig. 8 bis 12: sind perspektivische Ansichten einer erfindungsgemäßen Vorrichtung zum Transferieren von Blisterpackungen gemäß einer zweiten Ausführungsform, in denen die verschiedenen Phasen der Transferierbewegung eines ersten Saugerarms und der zeitgleichen Rückführbewegung des zweiten Saugerarms gezeigt sind;
- Fig. 13: ist eine Ansicht im Schnitt des ersten Saugerarms in den Fig. 8 bis 12; und
- Fig. 14: ist eine Ansicht wie in Fig. 1, wobei das Fördermittel als eine Linearmotor-Antriebseinheit ausgebildet ist.

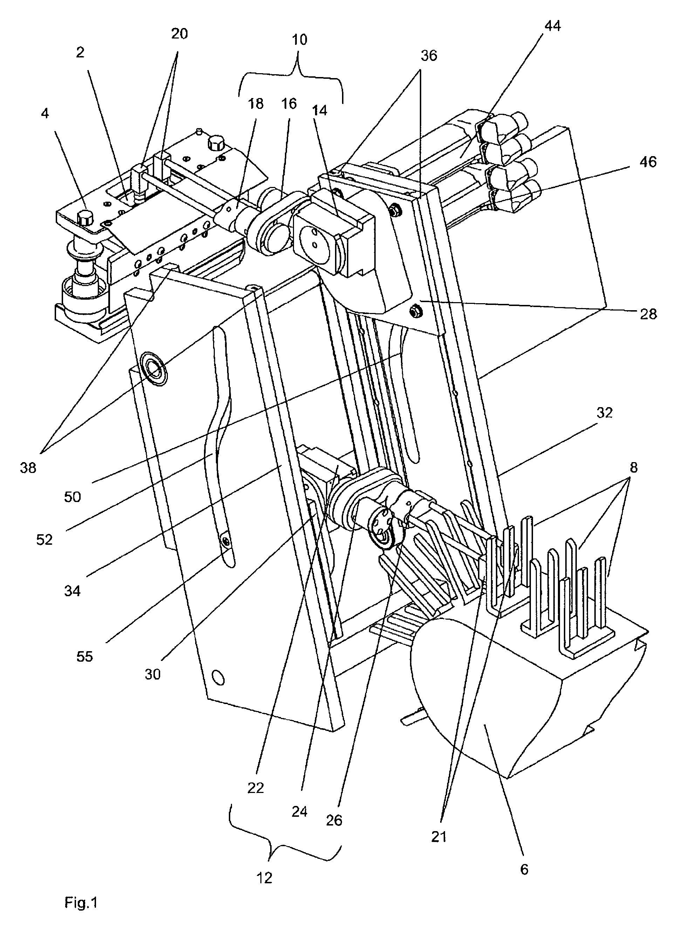

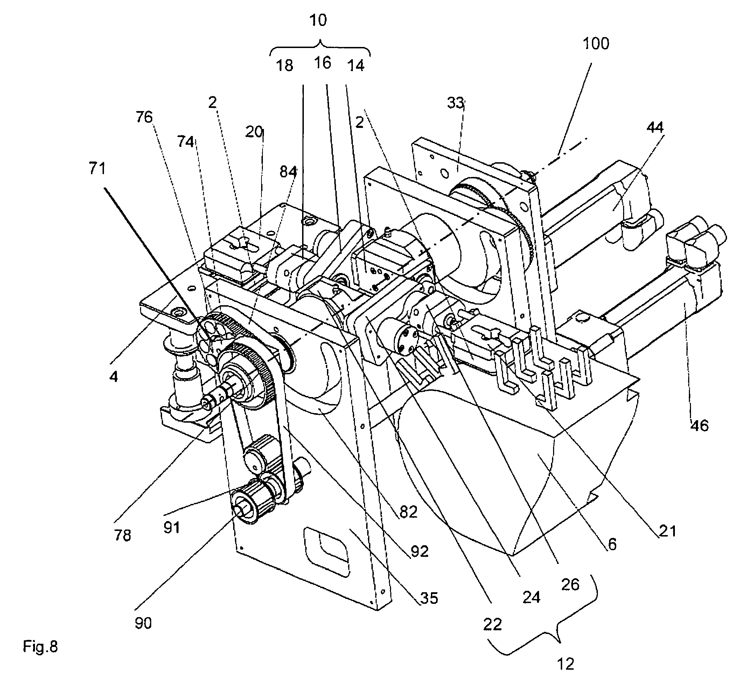

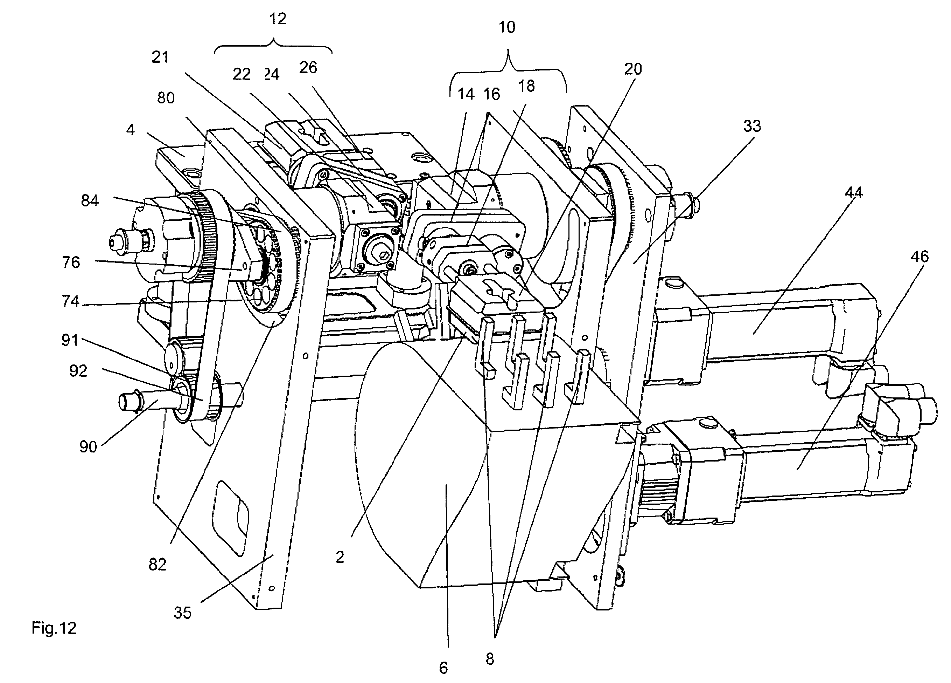

Fig. 1 zeigt eine erste Ausführungsform einer erfindungsgemäßen Vorrichtung zum Transferieren von Blisterpackungen 2 von einer Stanzstation 4 zu einem Fördermittel 6, das in den Fig. 1 bis 6 und in den Fig. 8 bis 12 als eine Packguttransportkette ausgebildet ist. Im Bereich der Stanzstation 4 kann ein Materialschacht mit aufeinander gestapelten Blisterpackungen 2 vorliegen, es ist aber auch eine Bereitstellung einzelner Blisterpackungen im Bereich der Stanzstation 4 denkbar. Das Fördermittel 6 weist im vorliegenden Beispielsfall gabelartige, mehrfingrige Trennwände 8 zur Bildung von jeweiligen Fächern zur Aufnahme mehrerer Blisterpackungen auf.

Die Vorrichtung zum Transferieren der Blisterpackungen 2 befindet sich zwischen der Stanzstation 4 und dem Fördermittel 6 und umfasst einen ersten Saugerarm 10 und einen zweiten Saugerarm 12, die auf beiden Seiten einer Mittelebene der Vorrichtung angeordnet sind. Der erste Saugerarm 10 weist ein erstes Segment 14, ein zweites Segment 16 und ein drittes Segment 18 auf. Das dritte Segment 18 weist an einem äußeren Abschnitt zwei Saugelemente 20 auf. Außerdem weist der zweite Saugerarm 12 ein erstes Segment 22, ein zweites Segment 24 und ein drittes Segment 26 auf. Das dritte Segment 26 weist an einem äußeren Abschnitt zwei Saugelemente 21 auf. Die drei Segmente 14, 16 und 18 des Saugerarms 10 sind schwenkbar miteinander verbunden, und die drei Segmente 22, 24 und 26 des Saugerarms 12 sind ebenfalls schwenkbar miteinander verbunden. Details zu den jeweiligen Schwenkverbindungen folgen weiter unten.

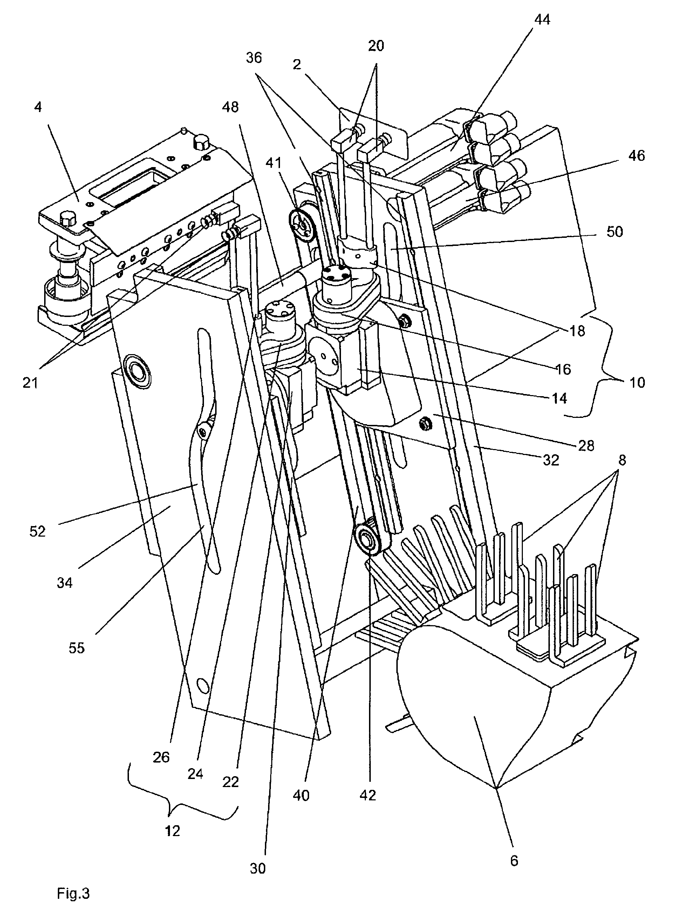

Die beiden Saugerarme 10 und 12 sind an jeweiligen Schlitten 28, 30 schwenkbar befestigt. Die Schlitten 28, 30 sind wiederum entlang einer Führungseinrichtung in Vertikalrichtung verfahrbar gelagert. Die Führungseinrichtung umfasst im dargestellten Beispielsfall zwei beabstandet zueinander angeordnete Rahmenplattenelemente 32, 34, die vorzugsweise miteinander verbunden sind. Dabei ist je Rahmenplattenelement 32, 34 ein Paar von Führungsschienen 36, 38 für die Schlitten 28, 30 vorgesehen. Der Antrieb zur vertikalen Verschiebung der Schlitten 28, 30 mit den daran angeordneten Saugerarmen 10 und 12 erfolgt beispielsweise mit je einem sich in vertikaler Richtung erstreckenden Zahnriementrieb pro Saugerarm. Jeder Zahnriementrieb umfasst vorzugsweise einen Zahnriemen 40 und zwei Riemenräder, nämlich ein oberes Antriebs-Riemenrad 41 und ein unteres Lauf-Riemenrad 42 (siehe Fig. 3).

Die Riemenräder 41, 42 sind jeweils auf den Innenseiten der parallelen Rahmenplattenelemente 32, 34 drehbeweglich befestigt und werden durch einen ersten und einen zweiten Drehantrieb 44, 46 in Drehung versetzt. Beide Drehantriebe 44, 46 sind in der Fig. 1 auf der rechten Seite bzw. an dem rechten Rahmenplattenelement 32 angebracht. Der erste Riementrieb, d.h. der in Fig. 1 rechte, dem Saugerarm 10 zugeordnete Riementrieb, wird direkt von dem ersten Drehantrieb 44 angetrieben, und der zweite Riementrieb, d.h. der in Fig. 1 linke, dem Saugerarm 12 zugeordnete Riementrieb, wird über eine eigens hierfür vorgesehene Antriebswelle 48 (Fig. 3), die sich quer zu den parallelen Rahmenplattenelementen 32, 34 und durch diese hindurch erstreckt, von dem zweiten Drehantrieb 46 angetrieben. Die jeweils den Saugerarmen 10 und 12 zugeordneten Riementriebe werden also von separaten Drehantrieben unabhängig voneinander in Drehung versetzt. Die Drehantriebe 44, 46 sind vorzugsweise Servomotoren.

Die beiden Schlitten 28, 30 sind mit den jeweiligen Zahnriemen 40 so verbunden, dass bei Antrieb der jeweiligen Antriebs-Riemenräder 41 in einer ersten Drehrichtung der jeweilige Schlitten 28, 30 und damit der daran angebrachte Saugerarm 10 bzw. 12 nach oben bewegt wird und dass bei Antrieb der Antriebs-Riemenräder 41 in einer zweiten, zur ersten Drehrichtung entgegengesetzten Drehrichtung der jeweilige Schlitten 28, 30 mit den daran angebrachten Saugerarmen 10 und 12 nach unten bewegt wird. Die Hin- und Herbewegung der Schlitten 28, 30 erfolgt wechselweise, d.h. während der erste Schlitten 28 nach unten bewegt wird, wird der zweite Schlitten 30 nach oben bewegt und umgekehrt.

Neben der beschriebenen Konfiguration kommen für den Fachmann aber auch viele andere Antriebe zum Erzeugen der Vertikalbewegung der Schlitten 28, 30 in Frage.

Wie weiter in Fig. 1 zu erkennen ist, sind in den Rahmenplattenelementen 32, 34 Kurvenbahnen 50, 52 vorgesehen, die jeweils in Form von vertikal und abschnittsweise schräg verlaufenden Schlitzen ausgebildet sind und in denen jeweils eine Kurvenrolle 55 geführt ist (nur die Kurvenrolle 55 ist in Figur 1 zu sehen). Die Schlitze weisen dabei jeweils drei Abschnitte auf, nämlich einen oberen, leicht zur Vertikalen geneigten Abschnitt, einen unteren vertikalen Abschnitt, und einen dazwischen liegenden, in Relation zum oberen und unteren Abschnitt flacheren, insbesondere bogenförmigen Verbindungsabschnitt. Damit hat die Bewegung der Kurvenrollen 55, die entlang der Kurvenbahnen 50, 52 geführt werden, auch eine horizontale Bewegungskomponente.

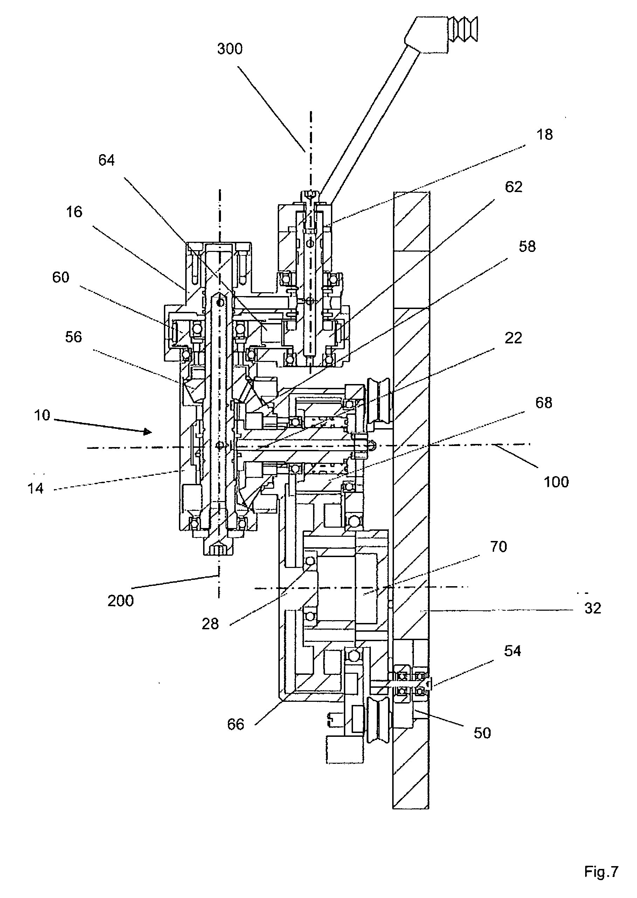

Fig. 7 zeigt den inneren Aufbau des ersten Saugerarms 10 in den Fig. 1 bis 6. Das erste Segment 14 des Saugerarms 10 ist um die erste Drehachse 100 schwenkbar an dem Schlitten 28 befestigt. An einem von der ersten Achse 100 beabstandeten Abschnitt des ersten Segments 14 ist das zweite Segment 16 um eine zur ersten Achse 100 im Wesentlichen senkrecht verlaufende zweite Achse 200 schwenkbar befestigt. Bei einer Schwenkbewegung des ersten Segments 14 um die erste Achse 100 wird die zweite Achse 200 entsprechend mitbewegt, d.h. die zweite Achse 200 ist ortsveränderlich. Das zweite Segment 16 weist wiederum einen von der zweiten Achse 200 beabstandeten Abschnitt auf, an dem das dritte Segment 18 um eine dritte Achse 300, die im Wesentlichen parallel und beabstandet zur zweiten Achse 200 verläuft, drehbar befestigt ist. Bei einer Schwenkbewegung des ersten und zweiten Segments 14 und 16 wird die dritte Achse 300 entsprechend mitbewegt, d.h. auch die dritte Achse 300 ist ortsveränderlich.

Im Speziellen ist in dem ersten Segment 14 ein zweites Kegelrad 56 drehbar gelagert, das fest mit der zweiten Achse 200 verbunden ist und somit mit dem zweiten Segment 16 drehfest verbunden ist. Weiterhin ist ein feststehendes erstes Kegelrad 58 vorgesehen, das mit dem zweiten Kegelrad 56 kämmt, wobei bei einer Schwenkbewegung des ersten Segments 14 um die erste Achse 100 das zweite Kegelrad 56 an dem feststehenden ersten Kegelrad 58 abrollt und somit das zweite Segment 16 um die zweite Achse 200 in Schwenkbewegung versetzt. Dabei ist das erste Kegelrad 58 mit dem Schlitten 28 nicht drehbar verbunden, und die Achse 100 fällt mit der Mittelachse des ersten Kegelrads 58 zusammen. Die Kegelräder 56 und 58 stehen in einem rechten Winkel zueinander, jedoch können die Kegelräder auch mit einem anderen Achsversatz vorgesehen sein.

Weiterhin ist in dem zweiten Segment 16 ein erstes Zahnriemenrad 60 angeordnet, das fest mit dem ersten Segment 14 verbunden ist, wobei die Mittelachse des ersten Zahnriemenrads 60 mit der zweiten Achse 200 zusammenfällt. Außerdem ist in dem zweiten Segment 16 ein zweites Zahnriemenrad 62 drehbar gelagert, das fest mit dem dritten Segment 18 verbunden ist. Die Drehachse des zweiten Zahnriemenrads 62 fällt mit der dritten Achse 300 zusammen. Bei Schwenkung des zweiten Segments 16 wird mit dieser Konstruktion über einen Zahnriemen 64 eine Drehbewegung des zweiten Zahnriemenrads 62 initiiert. Diese Drehbewegung des zweiten Zahnriemenrads 62 bewirkt wiederum eine Drehbewegung des drehfest mit dem zweiten Zahnriemenrad 62 verbundenen dritten Segments 18 um die dritte Achse 300.

Die Segmente 14, 16, 18 des Saugerarms 10 stehen demzufolge derart miteinander in Wirkverbindung, dass die Schwenkbewegung des ersten Segments 14 eine Schwenkbewegung des zweiten Segments 16 bewirkt und die Schwenkbewegung des zweiten Segments 16 eine Drehbewegung des dritten Segments 18 bewirkt.

Zusätzlich zeigt Fig. 7 die Kurvenrolle 54 sowie einen Übersetzungsmechanismus, der darauf ausgerichtet ist, eine Vertikalbewegung des Schlittens 28 in eine Drehantriebsbewegung des ersten Segments 14 des Saugerarms 10 umzuwandeln. Der Übersetzungsmechanismus besteht aus einem größeren Zahnrad 66 und einem kleineren Zahnrad 68, die beide an dem Schlitten 28 drehbar gelagert und miteinander kämmend angeordnet sind. An dem größeren Zahnrad 66 ist ein Hebel 70 befestigt, an dem an einem Endabschnitt die Kurvenrolle 54 angebracht ist. Die Kurvenrolle 54 ist wiederum in der Kurvenbahn 50 geführt und wird bei Verschiebung des Schlittens 18, 30 in Vertikalrichtung entsprechend dem Verlauf der Kurvenbahn 50 auch in einer Querrichtung bewegt, so dass der Hebel 70 in Querrichtung auslenkt wird. Infolge der Auslenkung des Hebels 70 in Querrichtung werden wiederum das mit dem Hebel 70 verbundene größere Zahnrad 66 und das damit kämmende, kleinere Zahnrad 68 in Drehung versetzt, und zwar in entgegengesetzte Drehrichtungen. Das kleinere Zahnrad 68 ist wiederum um die Achse 100 drehbar im Schlitten 28, 30 gelagert und mit dem ersten Segment 14 des ersten Saugerarms 10 fest verbunden. Insgesamt wird also durch die Vertikalbewegung des Schlittens 28 eine gleichzeitige Schwenkbewegung des ersten Segments 14 und damit einhergehend eine Schwenkbewegung des zweiten Segments 16 und eine Drehbewegung des dritten Segments 18 in Gang gesetzt.

Im Folgenden wird der Ablauf einer Hin- und Rückführungsbewegung der Saugerarme 10 und 12 gemäß der ersten Ausführungsform anhand der Fig. 1 bis 6 näher beschrieben.

In Fig. 1 befindet sich der rechte Schlitten 28 in der vertikal oberen Endposition und der erste Saugerarm 10 befindet sich in der Aufnahmeposition, in der die Saugerelemente 20 von oben an eine Blisterpackung 2 herangeführt sind und diese ansaugen. Gleichzeitig befindet sich der Schlitten 30 in der vertikal unteren Endposition und der zweite Saugerarm 12 befindet sich in der Abgabeposition, in der eine (nicht gezeigte) Blisterpackung in ein Fach des Fördermittels 6 abgelegt wird.

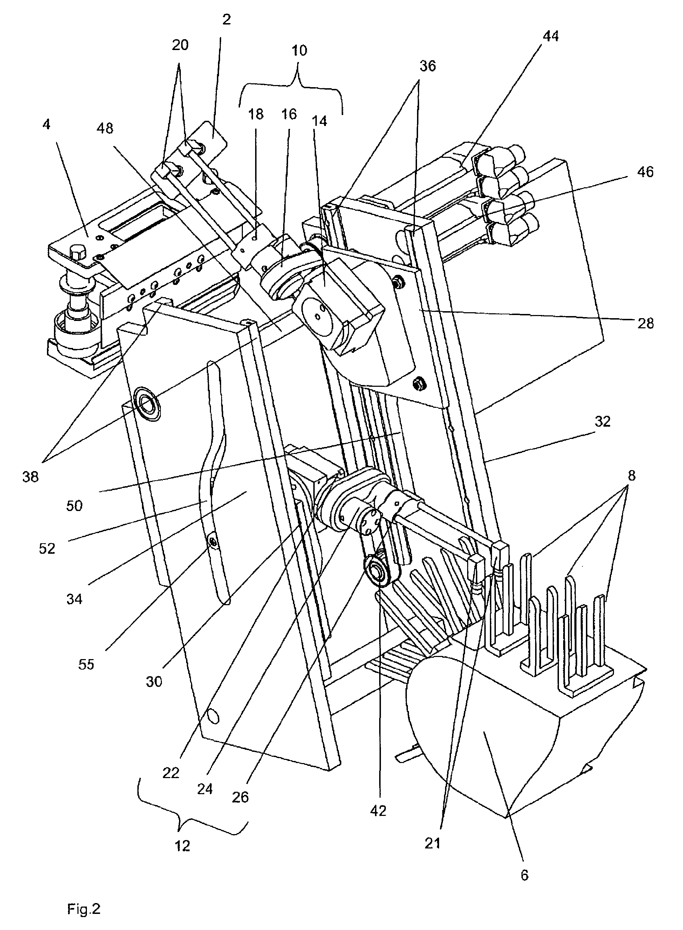

In Fig. 2 ist zu sehen, dass - ausgehend von der in Fig. 1 gezeigten Darstellung - der Schlitten 28 von der vertikalen oberen Position etwas nach unten bewegt wurde, und sich gleichzeitig der Saugerarm 10 um die erste Achse 100 im Uhrzeiger gedreht hat, sich gleichzeitig das zweite Segment 16 aus der waagerechten Stellung um die zweite Achse 200 nach außen geschwenkt hat, und sich gleichzeitig das dritte Segment 18 um die dritte Achse 300 so gedreht hat, dass die an den Saugelementen 20 gehaltene Blisterpackung 2 nach oben angehoben und nach außen gedreht ist. Darüber hinaus ist in Fig. 2 zu sehen, dass sich zwar der linke Schlitten 30 in Richtung nach oben bewegt hat, jedoch der zweite Saugerarm 12 noch keinerlei Schwenk- und Drehbewegungen vollzogen hat. Dies ist darauf zurückzuführen, dass sich die Kurvenrolle 55 bisher nur entlang dem unteren, d.h. dem steiler vertikal verlaufenden Abschnitt der Kurvenbahn 52 bewegt hat, so dass noch keine nennenswerte Auslenkbewegung in Querrichtung erfolgt ist, durch welche die Schwenkbewegung des Saugerarms 12 eingeleitet wird.

In Fig. 3 haben sich die beiden Schlitten 28, 30 gegenüber der Darstellung in Fig. 2 in entgegengesetzten vertikalen Richtungen soweit aufeinander zu bewegt, dass sich die Saugerarme 10, 12 auf gleicher Höhe befinden. In dieser Position sind die zweiten, mittleren Segmente 16, 24 der Saugerarme 10, 12 von der Mittelebene nach außen voneinander weggeschwenkt, während die dritten Segmente 18, 26 so gedreht sind, dass die Saugerelemente 20, 21 ebenfalls nach außen voneinander wegzeigen. Die von dem Saugerarm 10 mitgeführte Blisterpackung 2 befindet sich somit in einer vertikalen Ausrichtung, während sich der Saugerarm 12 in der Rückführbewegung ohne Blisterpackung befindet.

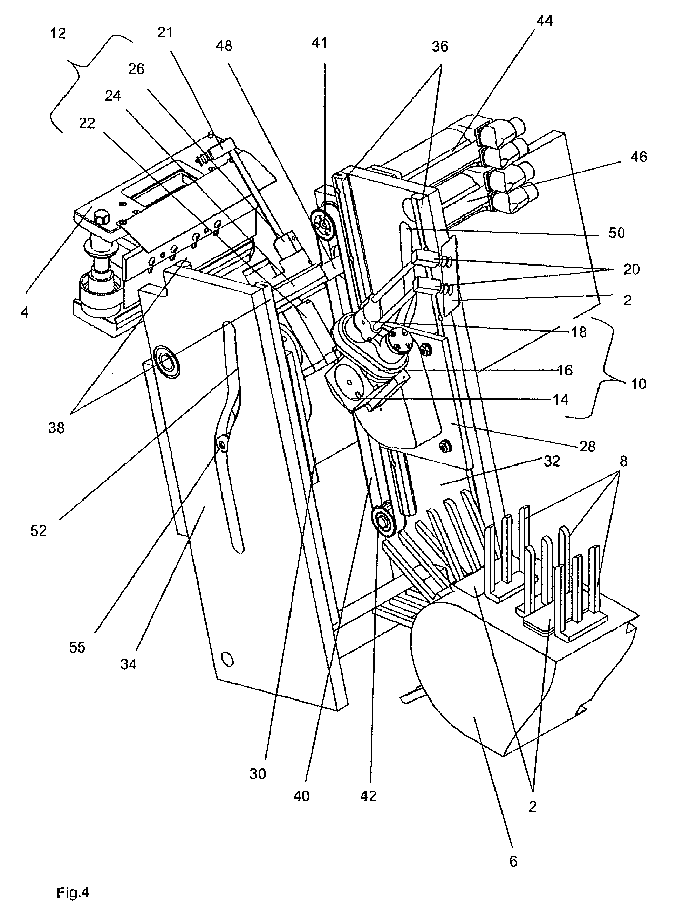

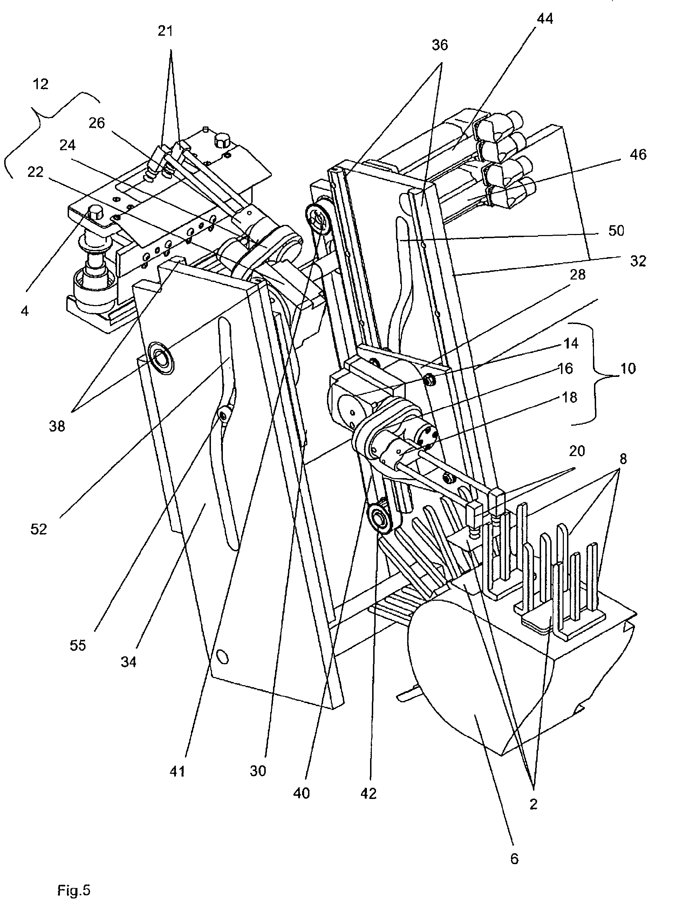

Zwischen der Darstellung in Fig. 3 und der Darstellung in Fig. 4 sind die beiden Schlitten 28, 30 bereits aneinander vorbeibewegt worden, ohne miteinander zu kollidieren. Wie in der Zusammenschau der Fig. 1 bis 4 zu sehen, wurde das zweite Segment 16 des ersten Saugerarms 10 von der Darstellung in Fig. 1 zur Darstellung in Fig. 2 zunächst etwas gegen den Uhrzeigersinn geschwenkt. Anschließend wurde das zweite Segment 16 von der Darstellung in Fig. 2 zur Darstellung in Fig. 3 weiter, in etwa um 180°, gegen den Uhrzeigersinn geschwenkt, so dass es von dem zweiten Segment 24 des zweiten Saugerarms 12 nach außen wegzeigt. Von der Darstellung in Fig. 3 zur Darstellung in Fig. 4 wurde das zweite Segment 16 des ersten Saugerarms 10 weiter gegen den Uhrzeigersinn geschwenkt, und von der Darstellung in Fig. 4 zur Darstellung in Fig. 5 wurde das zweite Segment 16 des ersten Saugerarms 10 noch weiter gegen den Uhrzeigersinn geschwenkt, so dass es insgesamt eine Schwenkbewegung um die zweite Achse 200 von in etwa 360° vollzogen hat. Bei der Rückbewegung des ersten Saugerarms 10 wird dasselbe Bewegungsmuster rückwärts durchlaufen. Die Bewegungen des ersten Saugerarms 10 und des zweiten Saugerarms 12 sind spiegelbildlich zur Mittelebene.

In Fig. 5 weist das zweite Segment 16 nun nach innen, und das dritte Segment 18 wurde gleichzeitig so mitgedreht, dass die Blisterpackung 2 horizontal, mit den Näpfen nach unten weisend ausgerichtet ist.

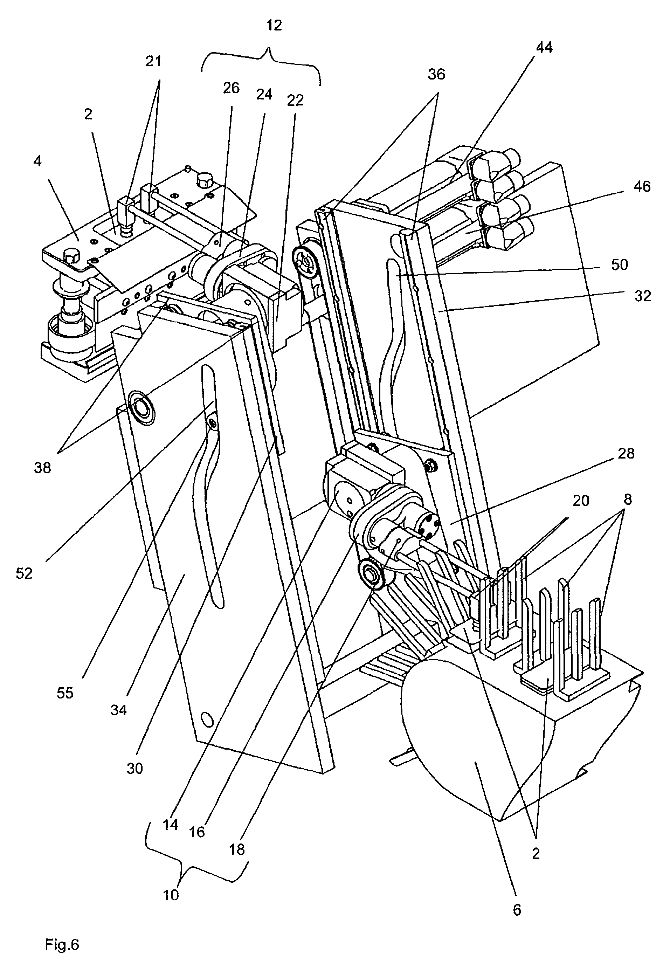

Fig. 6 zeigt schließlich den Zustand, bei dem die beiden Schlitten 28, 30 maximal vertikal nach unten und oben bewegt sind, wobei der erste Saugerarm 10 von der Darstellung in Fig. 5 lediglich in Vertikalrichtung mit nach unten bewegt wurde, um die Blisterpackung 2 von oben in der Aufnahme auf dem Fördermittel 6 abzulegen. In vorteilhafter Weise können so die Blisterpackungen 2 in den Aufnahmen des Fördermittels 6 übereinander zur Bildung von Blisterstapeln abgelegt werden.

Gleichzeitig wurde das zweite Segment 24 des zweiten Saugerarms 12 um die zweite Achse 200 nach innen geschwenkt, und das dritte Segmente 26 des zweiten Saugerarms 12 wurde so um die dritte Achse 300 gedreht, dass sich der Saugerarm 12 in der Aufnahmeposition befindet und die Saugelemente 21 eine weitere Blisterpackung aufnehmen können.

Wie aus den Fig. 1 und 6 zu entnehmen ist, können die dritten Segmente 18, 26 des ersten und des zweiten Saugerarms 10, 12 in denselben Aufnahme- und Abgabepositionen angeordnet werden.

In Fig. 8 bis 13 ist eine zweite Ausführungsform einer erfindungsgemäßen Vorrichtung zum Transferieren von Blisterpackungen 2 von einer Stanzstation 4 zu einem Fördermittel 6 gezeigt.

Die Transferiervorrichtung in den Figuren 8 bis 13 ist wiederum zwischen der Stanzstation 4 und dem Fördermittel 6 angeordnet, wobei sich die Stanzstation 4 und das Fördermittel 6 hier in etwa in einer gemeinsamen horizontalen Ebene befinden. Dies bedeutet auch, dass sich die Aufnahmeposition und die Abgabeposition in etwa in einer gemeinsamen horizontalen Ebene befinden.

Wie in den Figuren 8 bis 12 gezeigt, sind die beiden Saugerarme 10, 12 an einem Rahmen, der zwei parallele und voneinander beabstandete Rahmenplattenelemente 33, 35 umfasst, drehbar befestigt und werden jeweils von separaten Drehantriebseinheiten 44, 46 unabhängig voneinander in Drehung versetzt. Im Gegensatz zur ersten Ausführungsform werden die Saugerarme 10, 12 nicht mittels Schlitten in vertikaler Richtung bewegt, sondern sind ohne Translationsmöglichkeit in den Rahmenplattenelementen 33, 35 gelagert. Somit ist die erste Schwenkachse 100 ebenfalls ortsfest und für den ersten Saugerarm 10 und den zweiten Saugerarm 12 identisch.

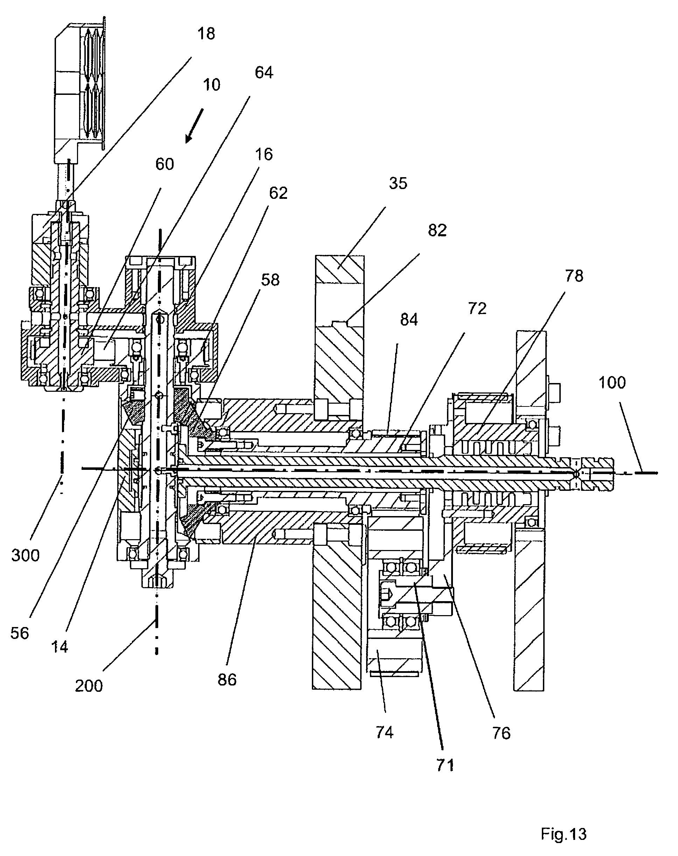

Fig. 13 zeigt den inneren Aufbau des ersten Saugerarms 10 in den Fig. 8 bis 12. Aufbau und Funktionsweise des Saugerarms 10 in Fig. 13 sind identisch mit dem Aufbau und der Funktionsweise des bereits in Bezug auf Fig. 7 beschriebenen Saugerarms 10. Dementsprechend wurden identische Bauteile mit denselben Bezugszeichen versehen, so dass die erneute Beschreibung identischer Teile entfällt.

Nachfolgend wird der Ablauf einer Transfer- und Rückführungsbewegung der Saugerarme 10 und 12 gemäß der zweiten Ausführungsform anhand der Fig. 8 bis 12 näher beschrieben.

In Fig. 8 befindet sich der erste Saugerarm 10 in der Aufnahmeposition, wobei das zweite, mittlere Segment 16 in Richtung nach innen geschwenkt ist und das dritte Segmente 18 so gedreht ist, dass die Saugelemente 20 eine Blisterpackung 2 in der Stanzstation 4 ansaugen und halten können. Und der zweite Saugerarm 12 befindet sich in der Abgabeposition, wobei das zweite, mittlere Segment 24 ebenfalls in Richtung nach innen geschwenkt ist und das dritte Segment 26 so gedreht ist, dass der Saugarm 12 eine Blisterpackung 2 in einer Aufnahme des Fördermittels 6 ablegen kann. Wenn die zweiten Segmente 16, 24 nach innen geschwenkt sind, bedeutet dies, dass die zweiten Segmente 16, 24 jeweils mit ihren äußeren Enden in Richtung auf die Mittelebene, die zwischen den Rahmenplattenelementen 33, 35 und zwischen den Saugerarmen 10, 12 verläuft, angeordnet sind.

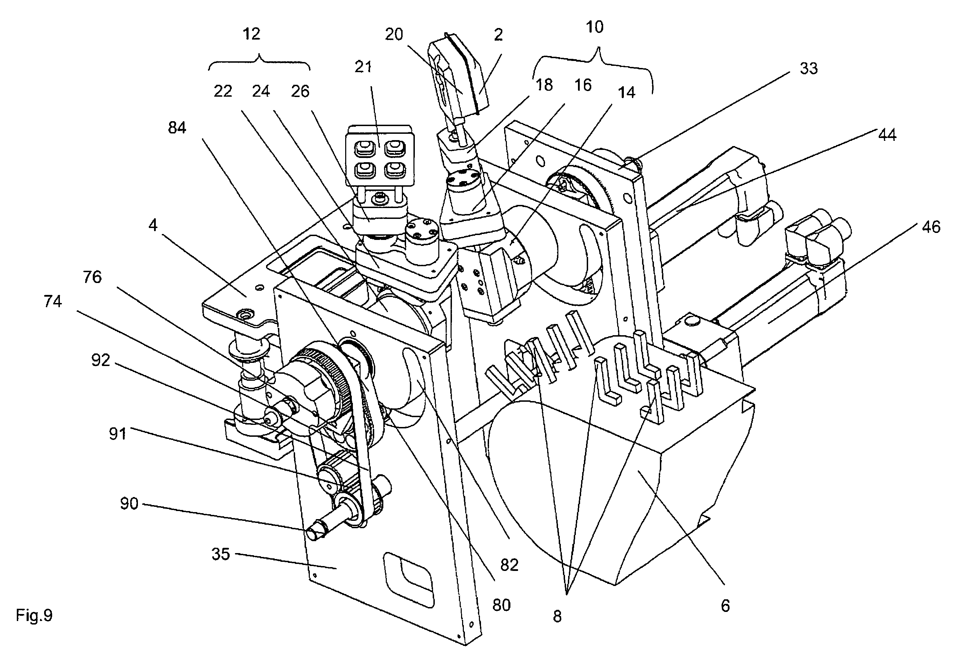

Zwischen der in Fig. 8 gezeigten Darstellung und der in Fig. 9 gezeigten Darstellung wurden die Saugerarme 10, 12 in entgegengesetzte Drehrichtungen um eine gemeinsame erste Achse 100 geschwenkt, wobei gleichzeitig die zweiten, mittleren Segmente 16, 24 voneinander weg gedreht wurden, und wobei das dritte Segment 18 des ersten Saugerarms 10 bereits eine Drehbewegung von in etwa 90° derart vollzogen hat, dass die Blisterpackung 2 nach außen gedreht ist.

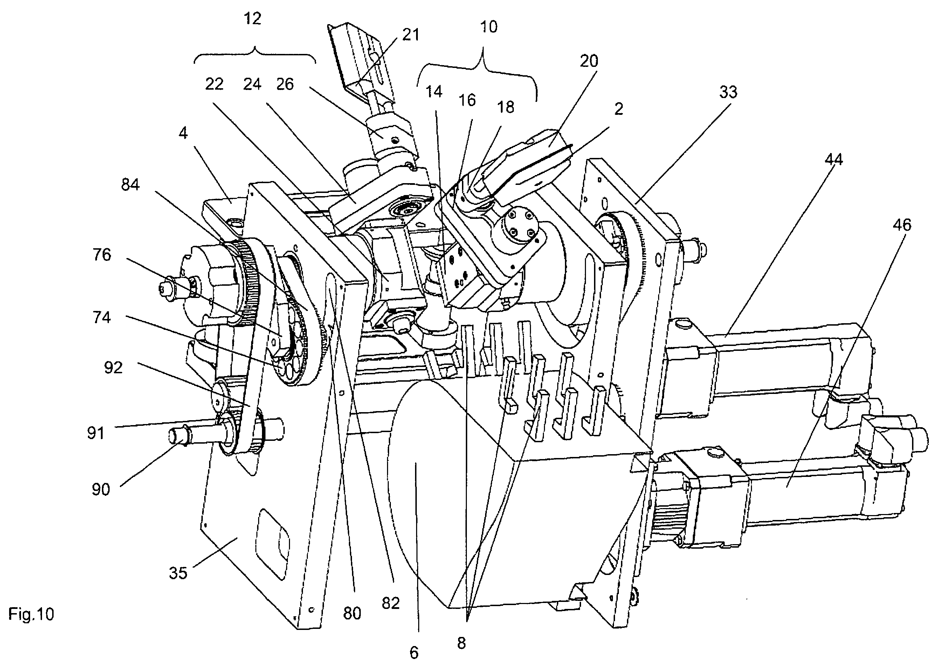

Zwischen der in Fig. 9 gezeigten Darstellung und der in Fig. 10 gezeigten Darstellung haben sich die Saugerarme 10, 12 in entgegengesetzte Drehrichtungen weitergeschwenkt und bereits kollisionsfrei aneinander vorbeibewegt. Diese Bewegung ist kollisionsfrei möglich, da die beiden zweiten, mittleren Segmente, 16, 24 zum Zeitpunkt des Aneinandervorbeibewegens jeweils in einer nach außen geschwenkten Stellung angeordnet sind und voneinander wegweisen.

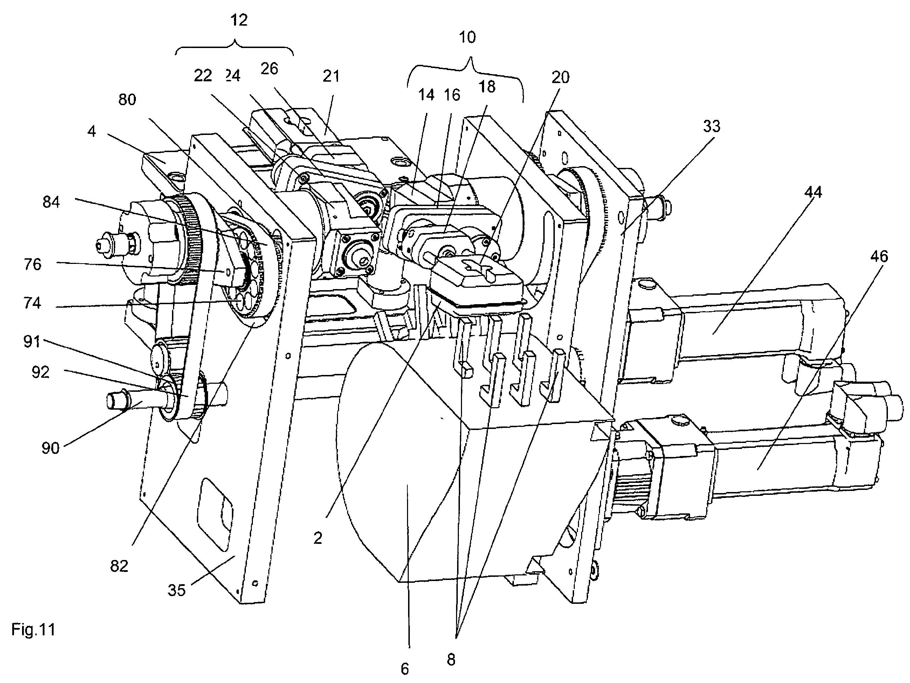

Zwischen der in Fig. 10 gezeigten Darstellung und der in Fig. 11 gezeigten Darstellung haben sich die Saugerarme 10, 12 in ihren Drehrichtungen weitergeschwenkt und gleichzeitig haben sich die zweiten Segmente 16, 24 in eine waagrechte Stellung bewegt, in der sie jeweils in Richtung nach innen zur Mittelebene weisen, während sich das dritte Segment 18 des ersten Saugerarms 10 so gedreht hat, dass die Blisterpackung 2 in etwa horizontal ausgerichtet ist. In Fig. 11 haben die Saugerarme 10, 12 bereits entgegengesetzte Drehbewegungen von 180° um ihre jeweiligen ersten Achsen 100 vollzogen, so dass sich der Saugerarm 10 in der Abgabeposition und der Saugerarm 12 in der Aufnahmeposition befindet.

Um die Blisterpackung 2, die in Fig. 11 horizontal ausgerichtet ist, von oben senkrecht nach unten in die Aufnahme des Fördermittels 6 bewegen und ablegen zu können, soll sich zwar der Saugerarm 10 weiterdrehen, jedoch das dritte Segment 18, 26 zur Beibehaltung der horizontalen Ausrichtung der Blisterpackung 2 nicht mehr weiterdrehen. Zu diesem Zweck ist ein Korrekturmechanismus vorgesehen, der die Wirkverbindung zwischen dem ersten Segment 14, 22 und dem zweiten Segment 16, 24 vorübergehend außer Kraft setzt, indem er eine Korrekturdrehung überlagert.

Der Korrekturmechanismus ist in den Fig. 8 und 13 detailliert dargestellt. Wichtig hierbei ist zunächst, dass das erste Kegelrad 58 nunmehr nicht mehr drehfest ist, sondern drehbar gelagert ist. Durch Drehung des ersten Kegelrads 58 in Einklang mit der Drehung des Saugerarms 10, 12 um die erste Achse 100 kann das zweite Kegelrad 56 stationär bezüglich der zweiten Drehachse 200 bleiben. Es wird dann keine Schwenkbewegung des zweiten Segments 16, 24 um die zweite Schwenkachse 200 und keine Drehbewegung des dritten Segments 18, 26 um die dritte Drehachse 300 eingeleitet. Dies ist meist an beiden Endbereichen der Schwenkbewegung des Saugerarms 10, 12 gewünscht.

Um die fehlende Drehung des zweiten Segments 16, 24 und des dritten Segments18, 26 nachzuholen, muss das erste Kegelrad 58 während des Rests der Bewegung zumindest teilweise entgegengesetzt zur Drehrichtung des ersten Segments 14, 22 bewegt werden. Dadurch wird eine schnellere Drehbewegung des zweiten Segments 16, 24 und des dritten Segments 18, 26 bewirkt als bei stationärem erstem Kegelrad 58.

Für diesen Korrekturmechanismus existiert eine ganze Reihe von Möglichkeiten. Eine Ausführungsform, die ohne zusätzlichen Antrieb auskommt, soll im Folgenden beschrieben werden.

Zunächst ist das erste Kegelrad 58 in einem an dem Rahmenplattenelement 35 angebrachten Gehäuse 86 drehbar gelagert. Der dargestellte Korrekturmechanismus 71 umfasst außerdem ein erstes, kleineres Riemenrad 72, welches mit dem ersten Kegelrad 58 drehfest verbunden ist und somit wie das erste Kegelrad 58 um die erste Achse 100 drehbar ist. Außerdem umfasst der Korrekturmechanismus 71 ein zweites, größeres Riemenrad 74, das an einem Hebelelement 76 drehbar gelagert ist. Die Riemenräder 72 und 74 sind über einen Korrektur-Zahnriemen 84 miteinander verbunden.

Das Hebelelement 76 ist wiederum drehfest an einem Drehantriebs-Riemenrad 78 befestigt, das drehbar um die erste Achse 100 gelagert ist. An dem zweiten Riemenrad 74 ist eine Korrektur-Kurvenrolle 80 (Fig. 9) angeordnet, die in einer Korrektur-Kurvenbahn 82, die als eine im Wesentlichen halbkreisförmige Nutkurve in einem Rahmenplattenelement 35 ausgebildet ist, geführt ist. Wenn das Drehantriebs-Riemenrad 78 durch die Antriebsanordnung 90, 91, 92 in Drehbewegung versetzt wird, wird gleichzeitig das zweite Riemenrad 74 entsprechend dem Drehwinkel des Drehantriebs-Riemenrades 78 mitgeführt. Gleichzeitig rollt die Korrektur-Kurvenrolle 80 in der Korrektur-Kurvenbahn 82 ab und setzt das zweite Riemenrad 74 in Drehbewegung. Diese Korrektur-Drehbewegung wird über den Korrektur-Zahnriemen 84 auf das erste Riemenrad 72 und somit auch auf das erste Kegelrad 58 übertragen.

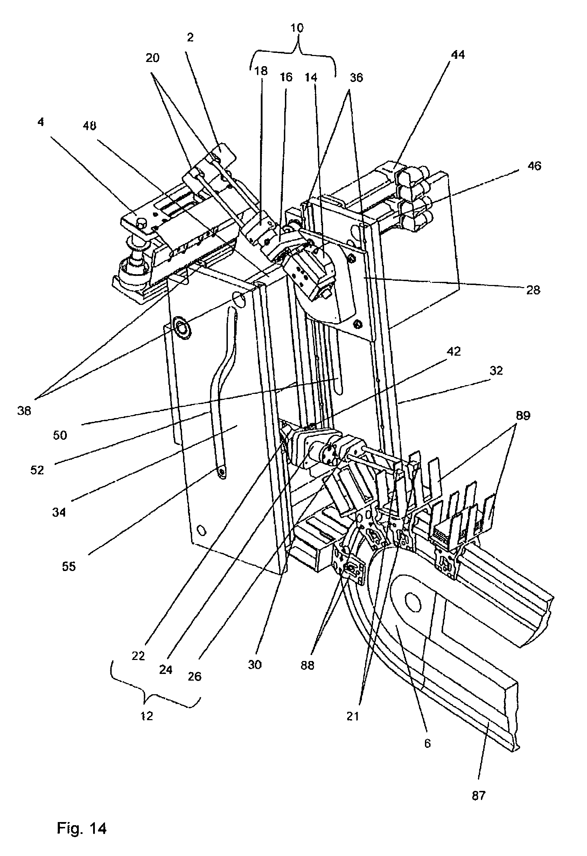

Fig. 14 zeigt eine alternative Ausgestaltung des Fördermittels 6 in Form einer Linearmotor-Antriebsvorrichtung. In der Laufschiene 87 des Fördermittels 6 sind bestrombare Spulen (nicht dargestellt) angeordnet, durch deren geeignete Ansteuerung wandernde Magnetfelder erzeugt werden. An den einzelnen Schlitten 88, die an der Laufschiene 87 umlaufen, sind Permanentmagneten (nicht dargestellt) angeordnet, auf welche die Magnetfelder wirken, sodass jeder einzelne Schlitten 88 unabhängig von den anderen Schlitten 88 bewegt werden kann. Auf jedem Schlitten 88 kann eine Packgutkassette 89 angeordnet sein. Auf diese Weise kann eine Packgutkassette 89 an bestimmten Stellen, wie beispielsweise an der Stelle zum Bilden von Blisterstapeln, in einer Rastposition stehen, während andere Packgutkassetten 89 zur gleichen Zeit eine bestimmte Bewegung ausführen können.

## Patentansprüche

1. Vorrichtung zum Transferieren von Blisterpackungen (2) von einer Stanzstation (4) an ein Fördermittel (6), mit einem ersten und einem zweiten Saugerarm (10, 12) zum Aufnehmen der Blisterpackungen (2) in einer Aufnahmeposition von der Stanzstation (4), zum Bewegen der Blisterpackungen (2) in einer Förderrichtung und zum Ablegen der Blisterpackungen (2) in einer Abgabeposition auf das Fördermittel (6),
wobei der erste und der zweite Saugerarm (10, 12) zu beiden Seiten einer Mittelebene angeordnet sind,
wobei der erste und der zweite Saugerarm (10, 12) um eine erste Achse (100), die senkrecht zur Förderrichtung und senkrecht zur Mittelebene verläuft, schwenkbar sind und die Schwenkbewegungen des ersten und zweiten Saugerarms (10, 12) derart steuerbar sind, dass die beiden Saugerarme (10, 12) gegenläufige hin- und hergehende Schwenkbewegungen ausführen,
wobei jeder Saugerarm (10, 12) ein erstes Segment (14, 22), ein zweites, mittleres Segment (16, 24), und ein drittes Segment (18, 26) aufweist,
wobei das erste Segment (14, 22) jedes Saugerarms (10, 12) an der zugehörigen ersten Achse (100) schwenkbar befestigt ist und einen von der ersten Achse (100) beabstandeten Abschnitt aufweist, an dem das zweite, mittlere Segment (16, 24) schwenkbar um eine zur ersten Achse (100) im Wesentlichen senkrecht verlaufende ortsveränderliche zweite Achse (200) befestigt ist, wobei das zweite Segment (16, 24) wiederum einen von der zweiten Achse (200) beabstandeten Abschnitt aufweist, an dem ein drittes Segment (18, 26) um eine ortsveränderliche dritte Achse (300), die im Wesentlichen parallel und beabstandet zur zweiten Achse (200) verläuft, drehbar befestigt ist, und wobei das dritte Segment (18, 26) einen Abschnitt aufweist, an dem wenigstens ein Saugelement (20, 21) zum Ansaugen und Halten einer Blisterpackung (2) angeordnet ist,
wobei die Transferbewegung der Blisterpackungen (2) von der Aufnahmeposition zur Abgabeposition und zurück eine kombinierte Bewegung ist, die sich zumindest aus der Schwenkbewegung um die erste Achse (100), der Schwenkbewegung um die zweite Achse (200), und der Drehbewegung um die dritte Achse (300) zusammensetzt,
wobei die Blisterpackungen (2) in der Aufnahmeposition von dem wenigstens einen Saugelement (20, 21) von oben aufgenommen und ebenfalls von oben in der Abgabeposition auf das Fördermittel (6) abgelegt werden, wobei die zweiten Segmente (16, 24) in der Aufnahmeposition und in der Abgabeposition jeweils in Richtung zur Mittelebene nach innen geschwenkt sind, und wobei die zweiten Segmente (16, 24) bei der gegenläufigen Schwenkbewegung der Saugerarme (10, 12) zwischen Aufnahmeposition und Abgabeposition voneinander wegschwenken, so dass die Saugerarme (10, 12) einander kollisionsfrei passieren können.

2. Vorrichtung nach Anspruch 1, **dadurch gekennzeichnet, dass** die Segmente (14, 16, 18; 22, 24, 26) der Saugerarme (10, 12) derart in Wirkverbindung stehen, dass die Schwenkbewegung des ersten Segments (14, 22) eine Schwenkbewegung des zweiten Segments (16, 24) bewirkt und die Schwenkbewegung des zweiten Segments (16, 24) eine Drehbewegung des dritten Segments (18, 26) bewirkt.

3. Vorrichtung nach Anspruch 1 oder 2, **dadurch gekennzeichnet, dass** zum Aufnehmen einer Blisterpackung (2) das dritte Segment (18) des ersten Saugerarmes (10) und das dritte Segment (26) des zweiten Saugerarms (12) in derselben Aufnahmeposition anordenbar sind.

4. Vorrichtung nach einem der vorhergehenden Ansprüche, **dadurch gekennzeichnet, dass** die zweiten Segmente (16, 24) eine Schwenkbewegung um die zweite Achse (200) von 360° ausführen, wenn sich die Saugerarme (10, 12) von der Aufnahmeposition zur Abgabeposition oder umgekehrt bewegen.

5. Vorrichtung nach einem der vorhergehenden Ansprüche, **dadurch gekennzeichnet, dass** in dem ersten Segment (14, 22) ein zweites Kegelrad (56) drehbar gelagert ist, das mit dem zweiten Segment (16, 22) drehfest verbunden ist, wobei bei einer Drehung des ersten Segments (14, 22) um die erste Achse (100) das Kegelrad (56) an einem ersten Kegelrad (58) abrollt und das zweite Segment (14, 24) um die zweite Achse (200) in Schwenkbewegung versetzt.

6. Vorrichtung nach Anspruch 5, **dadurch gekennzeichnet, dass** in dem zweiten Segment (16, 24) ein erstes Zahnriemenrad (60) angeordnet und drehfest mit dem ersten Segment (14, 22) verbunden ist, dass in dem zweiten Segment (16, 24) außerdem ein zweites Zahnriemenrad (62) angeordnet und drehbar gelagert ist, und dass das erste Zahnriemenrad (60) und das zweite Zahnriemenrad (62) über einen Zahnriemen (64) wirkverbunden sind, wobei eine Schwenkbewegung des zweiten Segments (16, 24) eine Drehbewegung des zweiten Zahnriemenrads (62) bewirkt.

7. Vorrichtung nach Anspruch 6, **dadurch gekennzeichnet, dass** das zweite Zahnriemenrad (62) drehfest mit dem dritten Segment (18, 26) verbunden ist und eine Drehbewegung des zweiten Zahnriemenrads (62) eine Drehbewegung des dritten Segments (18, 26) um die dritte Achse (300) bewirkt.

8. Vorrichtung nach einem der vorhergehenden Ansprüche, **dadurch gekennzeichnet, dass** die Aufnahmeposition und die Abgabeposition in unterschiedlichen horizontalen Ebenen liegen.

9. Vorrichtung nach Anspruch 8, **dadurch gekennzeichnet, dass** die beiden Saugerarme (10, 12) an jeweiligen Schlitten (28, 30) drehbar gelagert sind, die an jeweiligen Führungseinrichtungen (36, 38) in vertikaler Richtung verfahrbar sind, und für jeden Schlitten (28, 30) eine Antriebseinheit (40, 41, 42, 44, 46) zum Verfahren in vertikaler Richtung vorgesehen ist, wobei zwischen den Saugerarmen (10, 12) und der jeweiligen Antriebseinheit (40, 41, 42, 44, 46) eine Zwangsführung derart vorgesehen ist, dass eine Vertikalbewegung der Schlitten (28, 30) eine Schwenkbewegung der Saugerarme (10, 12) in gegenläufigen Drehrichtungen um die erste Achse (100) bewirkt, und wobei die erste Achse (100) aufgrund der Verschiebung der Schlitten (28, 30) ortsveränderlich ist.

10. Vorrichtung nach Anspruch 9, **dadurch gekennzeichnet, dass** die Antriebseinheit (40, 41, 42, 44, 46) jeweils einen Drehantrieb (44, 46) umfasst und jedem Schlitten (28, 30) ein in vertikaler Richtung verlaufender Zahnriementrieb mit je einem Zahnriemen (40), einem Antriebs-Riemenrad (41), und einem Lauf-Riemenrad (42) zugeordnet ist, wobei die Schlitten (28, 30) mit den jeweiligen Zahnriemen (40) verbunden sind und jeder Drehantrieb (44, 46) das jeweilige Antriebs-Riemenrad (41) antreibt, um die Schlitten (28, 30) in vertikaler Richtung zu bewegen.

11. Vorrichtung nach Anspruch 9 oder 10, **dadurch gekennzeichnet, dass** an jedem Schlitten (28, 30) ein größeres Zahnrad (66) drehbar gelagert ist, an dem wiederum ein Hebel (70) befestigt ist, wobei an dem Hebel (70) eine Kurvenrolle (54) angeordnet ist, die in einer Kurvenbahn (52) derart geführt ist, dass das Bewegen der Kurvenrolle (54) entlang der Kurvenbahn (52) eine Auslenkbewegung des Hebels (70) und damit eine Drehbewegung des größeren Zahnrads (66) bewirkt, und wobei ein kleineres Zahnrad (68), das mit dem größeren Zahnrad (66) kämmt, mit dem ersten Segment (14, 22) des Saugerarmes (10, 12) in Drehantriebsverbindung steht, um den Saugerarm (10, 12) um die erste Achse (100) in Schwenkbewegung zu versetzen.

12. Vorrichtung nach einem der Ansprüche 5 bis 7, **dadurch gekennzeichnet, dass** das erste Kegelrad (58) nicht drehbar am Schlitten (28, 30) fixiert ist.

13. Vorrichtung nach einem der Ansprüche 1 bis 7, **dadurch gekennzeichnet, dass** die Aufnahmeposition und die Abgabeposition im Wesentlichen in einer gemeinsamen horizontalen Ebene liegen.

14. Vorrichtung nach Anspruch 13, **dadurch gekennzeichnet, dass** jedem Saugerarm (10, 12) ein Drehantrieb (44, 46) zugeordnet ist, um die Saugerarme (10, 12) in entgegengesetzte Drehrichtungen zu schwenken.

15. Vorrichtung nach Anspruch 14, rückbezogen auf einen der Ansprüche 5 bis 7, **dadurch gekennzeichnet, dass** das erste Kegelrad (58) drehbar gelagert ist und über einen Korrekturmechanismus (71) antreibbar ist.

## Claims

1. Device for transferring blister packs (2) from a stamping station (4) to a conveying means (6), with a first and a second suction arm (10, 12) for picking up the blister packs (2) in a receiving position from the stamping station (4), for moving the blister packs (2) in a conveying direction and for setting down the blister packs (2) in a delivery position onto the conveying means (6),
wherein the first and second suction arm (10, 12) are arranged either side of a centre plane,
wherein the first and the second suction arm (10, 12) are pivotable about a first axis (100) which runs perpendicular to the conveying direction and perpendicular to the centre plane, and the pivotal movements of the first and second suction arm (10, 12) are controllable in such a way that the two suction arms (10, 12) execute opposing to and fro pivotal movements,
wherein each suction arm (10, 12) comprises a first segment (14, 22), a second, middle segment (16, 24) and a third segment (18, 26),
wherein the first segment (14, 22) of each suction arm (10, 12) is fastened for pivotal movement on the associated first axis (100) and has a portion spaced from the first axis (100), on which portion the second, middle segment (16, 24) is fastened for pivotable movement about a position-variable second axis (200) which runs substantially perpendicularly to the first axis (100), wherein the second segment (16, 24) has in turn a portion spaced from the second axis (200) and on which a third segment (18 26) is fastened rotatably about a position-variable third axis (300) which runs substantially parallel to and spaced from the second axis (200), and wherein the third segment (18, 26) has a portion on which at least one suction element (20, 21) is arranged for sucking up and holding a blister pack (2),
wherein the transfer movement of the blister packs (2) from the receiving position to the delivery position and back again is a combined motion which is made up of at least the pivotal movement about the first axis (100), the pivotal movement about the second axis (200), and the rotational movement about the third axis (300),
wherein the blister packs (2) are picked up in the receiving position from above by the at least one suction element (20, 21) and are likewise deposited from above in the delivery position onto the conveying means (6), wherein the second segments (16, 24) are each pivoted inwards in the direction of the centre plane in the receiving position and in the delivery position, and wherein the second segments (16, 24) pivot away from one another during the opposing pivotal movement of the suction arms (10, 12) between the receiving position and the delivery position, so that the suction arms (10, 12) can pass one another without collision.

2. Device according to claim 1, **characterised in that** the segments (14, 16, 18; 22, 24, 26) of the suction arms (10, 12) are in operative connection so that the pivotal movement of the first segment (14, 22) causes a pivotal movement of the second segment (16, 24), and the pivotal movement of the second segment (16, 24) causes a rotational movement of the third segment (18, 26).

3. Device according to claim 1 or 2 **characterised in that** in order to receive a blister pack (2) the third segment (18) of the first suction arm (10) and the third segment (26) of the second suction arm (12) are capable of being arranged in the same receiving position.

4. Device according to one of the preceding claims **characterised in that** the second segments (16, 24) execute a pivotal movement of 360° about the second axis (200) when the suction arms (10, 12) move from the receiving position to the delivery position or vice versa.

5. Device according to one of the preceding claims **characterised in that** a second bevel gearwheel (56) is mounted rotatable in the first segment (14, 22) and is connected secured against rotation to the second segment (16, 22) wherein during rotation of the first segment (14, 22) about the first axis (100) the bevel gearwheel (56) rolls down on a first bevel gearwheel (58) and sets the second segment (14, 24) in a pivotal movement about the second axis (200).

6. Device according to claim 5 **characterised in that** a first toothed belt wheel (60) is disposed in the second segment (16, 24) and is connected secured against rotation to the first segment (14, 22), that in the second segment (16, 24) there is furthermore a second toothed belt wheel (62) which is mounted for rotation, and that the first toothed belt wheel (60) and the second toothed belt wheel (62) are operatively connected via a toothed belt (64) wherein a pivotal movement of the second segment (16, 24) causes a rotational movement of the second toothed belt wheel (62).

7. Device according to claim 6 **characterised in that** the second toothed belt wheel (62) is connected secured against rotation to the third segment (18, 26), and a rotational movement of the second toothed belt wheel (62) causes a rotational movement of the third segment (18, 26) about the third axis (300).

8. Device according to one of the preceding claims **characterised in that** the receiving position and the delivery position lie in different horizontal planes.

9. Device according to claim 8 **characterised in that** the two suction arms (10 12) are mounted rotatably on respective slide carriages (28, 30) which are movable vertically on respective guide units (36, 38), and for each slide carriage (28, 30) there is a drive unit (40, 41, 42, 44, 46) for driving in the vertical direction, wherein a compulsory guide is provided between the suction arms (10, 12) and the respective drive unit (40, 41, 42, 44, 46) in such a way that a vertical movement of the slide carriage (28, 30) causes a pivotal movement of the suction arms (10, 12) in opposing rotational directions about the first axis (100), and wherein the first axis (100) can be varied in position as a result of the displacement of the slide carriage (28, 30).

10. Device according to claim 9 **characterised in that** the drive unit (40, 41, 42, 44, 46) comprises each time a rotary drive (44, 46) and each slide carriage (28, 30) is assigned a vertically running toothed belt drive each with a toothed belt (40), a driving belt wheel (41), and a running belt wheel (42), wherein the slide carriages (28, 30) are connected to the respective toothed belt (40) and each rotary drive (44, 46) drives the respective driving belt wheel (41) in order to move the slide carriages (28, 30) in the vertical direction.

11. Device according to claim 9 or 10 **characterised in that** a larger toothed wheel (66) is mounted rotatably on each slide carriage (28, 30) and in turn a lever (70) is fastened on the larger toothed wheel wherein a cam roller (54) is arranged on the lever (70) and is guided in a cam track (52) so that the movement of the cam roller (54) along the cam track (52) causes a deflection movement of the lever (70) and thus a rotational movement of the larger toothed wheel (66), and wherein a smaller toothed wheel (68), which meshes with the larger toothed wheel (66), is in rotary driving connection with the first segment (14, 22) of the suction arm (10, 12) in order to set the suction arm (10, 12) in pivotal movement about the first axis (100).

12. Device according to one of claims 5 to 7 **characterised in that** the first bevel gearwheel (58) is fixed non-rotatably on the slide carriage (28, 30).

13. Device according to one of claims 1 to 7 **characterised in that** the receiving position and the delivery position lie substantially in a common horizontal plane.

14. Device according to claim 13 **characterised in that** each suction arm (10, 12) is assigned a rotary drive (44, 46) in order to pivot the suction arms (10, 12) in opposite rotational directions.

15. Device according to claim 14, with reference to one of claims 5 to 7, **characterised in that** the first bevel gearwheel (58) is mounted rotatable and is drivable via a correction mechanism (71).

## Revendications

1. Dispositif de transfert d'emballages blister (2) d'une station de découpage (4) à un moyen de transport (6) comprenant un premier et un second bras aspirateur (10, 12) pour prendre des emballages blister (2) dans une position de prise depuis la station de découpage (4), pour déplacer les emballages blister (2) dans une direction de transport et pour déposer les emballages blister (2) dans une position de remise sur le moyen de transport (6),
le premier et le second bras aspirateurs (10, 12) étant agencés des deux côtés d'un plan médian,
le premier et le second bras aspirateurs (10, 12) pouvant pivoter autour d'un premier axe (100) qui s'étend perpendiculairement à la direction de transport et perpendiculairement au plan médian, et les mouvements pivotants du premier et second bras aspirateurs (10, 12) pouvant être commandés de telle manière que les deux bras aspirateurs (10, 12) réalisent des mouvements pivotants alternatifs en sens inverse,
chaque bras aspirateur (10, 12) présentant un premier segment (14, 22), un deuxième segment médian (16, 24) et un troisième segment (18, 26),
le premier segment (14, 22) de chaque bras aspirateur (10, 12) étant fixé de manière à pouvoir pivoter sur le premier axe afférent (100) et présentant une section espacée du premier axe (100) sur laquelle le deuxième segment médian (16, 24) est fixé de manière à pouvoir pivoter autour d'un deuxième axe (200) déplaçable s'étendant sensiblement perpendiculairement par rapport au premier axe (100), le deuxième segment (16, 24) présentant de nouveau une section espacée du deuxième axe (200) sur laquelle un troisième segment (18, 26) est fixé de manière rotative autour d'un troisième axe (300) déplaçable qui s'étend sensiblement parallèlement et à distance du deuxième axe (200), et le troisième segment (18, 26) présentant une section sur laquelle au moins un élément aspirateur (20, 21) est agencé pour aspirer et maintenir un emballage blister (2),
le mouvement de transfert des emballages blister (2) de la position de prise à la position de remise et inversement étant un mouvement combiné qui se compose au moins du mouvement pivotant autour du premier axe (100), du mouvement pivotant autour du deuxième axe (200) et du mouvement rotatif autour du troisième axe (300),
les emballages blister (2) étant pris de dessus dans la position de prise par au moins un élément d'aspiration (20, 21) et étant déposés aussi par le haut dans la position de remise sur le moyen de transport (6), les seconds segments (16, 24) étant pivotés vers l'intérieur dans la position de prise et dans la position de remise respectivement en direction du plan médian, et les seconds segments (16, 24) pivotant lors du mouvement pivotant en sens inverse des bras aspirateurs (10, 12) entre la position de prise et la position de remise loin l'un de l'autre de sorte que les bras aspirateurs (10, 12) puissent passer sans collision.

2. Dispositif selon la revendication 1, **caractérisé en ce que** les segments (14, 16, 18 ; 22, 24, 26) des bras aspirateurs (10, 12) sont en liaison active de telle manière que le mouvement pivotant du premier segment (14, 22) provoque un mouvement pivotant du deuxième segment (16, 24) et le mouvement pivotant du deuxième segment (16, 24) provoque un mouvement rotatif du troisième segment (18, 26).

3. Dispositif selon la revendication 1 ou 2, **caractérisé en ce que** pour la prise d'un emballage blister (2), le troisième segment (18) du premier bras aspirateur (10) et le troisième segment (26) du second bras aspirateur (12) peuvent être agencés dans la même position de prise.

4. Dispositif selon l'une des revendications précédentes, **caractérisé en ce que** les deuxièmes segments (16, 24) réalisent un mouvement pivotant autour du deuxième axe (200) de 360° lorsque les bras aspirateurs (10, 12) se déplacent de la position de prise à la position de remise ou inversement.

5. Dispositif selon l'une des revendications précédentes, **caractérisé en ce qu'**une seconde roue conique (56) est logée de manière rotative dans le premier segment (14, 22), laquelle est reliée de manière solidaire en rotation au deuxième segment (16, 22), la roue conique (56) se déroulant sur une première roue conique (58) lors d'une rotation du premier segment (14, 22) autour du premier axe (100) et amenant le deuxième segment (14, 24) en mouvement pivotant autour du deuxième axe (200).

6. Dispositif selon la revendication 5, **caractérisé en ce que** dans le deuxième segment (16, 24), une première roue de courroie dentée (60) est agencée et est reliée de manière solidaire en rotation au premier segment (14, 22), **en ce que** dans le deuxième segment (16, 24), une seconde roue de courroie dentée (62) est en outre agencée et logée de manière rotative, et **en ce que** la première roue de courroie dentée (60) et la seconde roue de courroie dentée (62) sont liées activement par une courroie dentée (64), un mouvement pivotant du deuxième segment (16, 24) provoquant un mouvement rotatif de la seconde roue de courroie dentée (62).

7. Dispositif selon la revendication 6, **caractérisé en ce que** la seconde roue de courroie dentée (62) est reliée de manière solidaire en rotation au troisième segment (18, 26) et un mouvement rotatif de la seconde roue de courroie dentée (62) provoque un mouvement rotatif du troisième segment (18, 26) autour du troisième axe (300).

8. Dispositif selon l'une des revendications précédentes, **caractérisé en ce que** la position de prise et la position de remise se trouvent dans différents plans horizontaux.

9. Dispositif selon la revendication 8, **caractérisé en ce que** les deux bras aspirateurs (10, 12) sont logés de manière à pouvoir tourner sur des chariots respectifs (28, 30) qui sont déplaçables sur des dispositifs de guidage respectifs (36, 38) dans la direction verticale, et pour chaque chariot (28, 30), une unité d'entraînement (40, 41, 42, 44, 46) est prévue pour le déplacement dans la direction verticale, un guidage forcé étant prévu entre les bras aspirateurs (10, 12) et l'unité d'entraînement (40, 41, 42, 44, 46) respective de telle manière qu'un mouvement vertical des chariots (28, 30) provoque un mouvement pivotant des bras aspirateurs (10, 12) autour du premier axe (100) dans des sens de rotation inverses, et le premier axe (100) étant déplaçable en raison du déplacement des chariots (28, 30).

10. Dispositif selon la revendication 9, **caractérisé en ce que** l'unité d'entraînement (40, 41, 42, 44, 46) comporte respectivement un entraînement rotatif (44, 46) et à chaque chariot (28, 30) étant associée une transmission à courroie dentée s'étendant dans la direction verticale avec chacun une courroie dentée (40), une roue de courroie d'entraînement (41) et une roue de courroie de roulement (42), les chariots (28, 30) étant reliés aux courroies dentées respectives (40) et chaque entraînement rotatif (44, 46) entraînant la roue de courroie d'entraînement respective (41) afin de déplacer les chariots (28, 30) dans la direction verticale.

11. Dispositif selon la revendication 9 ou 10, **caractérisé en ce que** sur chaque chariot (28, 30), une plus grande roue dentée (66) est logée de manière rotative, sur laquelle de nouveau un levier (70) est fixé, un rouleau de guidage (54) étant agencé sur le levier (70), lequel rouleau est guidé dans un chemin incurvé (52) de telle manière que le déplacement du rouleau de guidage (54) le long du chemin incurvé (52) provoque un mouvement de déviation du levier (70) et ainsi un mouvement rotatif de la plus grande roue dentée (66), et une plus petite roue dentée (68) qui vient en prise avec la plus grande roue dentée (66) étant en liaison d'entraînement rotatif avec le premier segment (14, 22) du bras aspirateur (10, 12) afin d'amener en mouvement pivotant le bras aspirateur (10, 12) autour du premier axe (100).

12. Dispositif selon l'une des revendications 5 à 7, **caractérisé en ce que** la première roue conique (58) est fixée de manière non rotative sur le chariot (28, 30).

13. Dispositif selon l'une des revendications 1 à 7, **caractérisé en ce que** la position de prise et la position de remise se trouvent sensiblement dans un plan horizontal commun.

14. Dispositif selon la revendication 13, **caractérisé en ce qu'**un entraînement rotatif (44, 46) est associé à chaque bras aspirateur (10, 12) afin de pivoter les bras aspirateurs (10, 12) dans des sens de rotation opposés.

15. Dispositif selon la revendication 14 dans la mesure où elle est relative à l'une des revendications 5 à 7, **caractérisé en ce que** la première roue conique (58) est logée de manière à pouvoir tourner et peut être entraînée par l'intermédiaire d'un mécanisme de correction (71).
